# EUROPEAN PATENT APPLICATION

(11) **EP 2 712 055 A1**
(43) Date of publication of application: **26.03.2014**
(21) Application number: 12781831.8
(22) Date of filing: 09.05.2012
(51) Int. Cl.: H02K 1/06

(54) **HETEROGENEOUS MOTOR**

(30) Priority: 12.05.2011 CN 201110122195
(71) Applicant: Chen, He, Beijing 100025 (CN)
(72) Inventor: Chen, He, Beijing 100025 (CN)
(74) Representative: Schwarz & Partner
(86) International application number: PCT/CN2012/000623
(87) International publication number: WO 2012/152068

(57) **Abstract**

The present invention provides an anomalous electric machinery including an armature component (400) and a magnetic pole component (500) which perform a relative movement around a common axis (100). The armature component (400) and the magnetic pole component (500) constitute a magneto-electricity system unit (203) which can form an axisymmetric anomalous curved shape around the common axis (100). The axisymmetric anomalous curved shape of the magneto-electricity system unit (203) is not a plane that is perpendicular to the common axis (100) or appears to be approximately perpendicular to the common axis. The present invention innovates in the structure and form of the electric machinery and changes the structure and shape of the magneto-electricity system unit to adapt to the requirements of special application space and to raise space utilization rate.

## Description

### FIELD OF THE INVENTION

The present invention relates to the field of an electric machinery, in particular relates to an anomalous electric machinery, including anomalous electric motor and anomalous generator.

### BACKGROUND OF THE INVENTION

Electric motor and generator can be collectively called electric machinery. Electric machinery is a kind of electromagnetic device that can achieve electric energy conversion or transfer based on law of electromagnetic induction. Electric motor can convert electric energy into mechanical energy, while generator can convert mechanical energy into electric energy. Electric motor and generator both perform electricity and magnetism conversion and can be retrofitted into each other.

The essential constituting parts of an electric machinery, either as an electric motor or as a generator are an armature component (including auxiliary parts such as a conductor coil and an armature core) and a magnetic pole component (permanent magnet or electromagnet). The relative movement between the armature component and the magnetic pole component can produce electric and magnetic interaction. Therefore, the magneto-electricity system constituted by a armature component and a magnetic pole component can be considered as a basic unit.

Electric motor is an apparatus that can convert electric energy into mechanic energy. It is made according to the phenomenon that electrified coils in magnetic field can be forced to move. Electric motor mainly contains a stator and a rotor. The direction of the forced movement of the electrified conductors in magnetic field is associated with the current direction and the direction of the magnetic induction line (magnetic field direction). The working principle of the electric motor is that the electric motor can be forced to rotate by the force generated by current in magnetic field; therefore it can convert electric energy into mechanical energy. Electric motor mainly comprises an electromagnet winding or distributed stator winding used to generate magnetic field and an armature or rotor which can be forced to rotate when current flows through its conductors in the magnetic field. Some of the machines can act both as an electric motor and also as a generator.

Generator is an apparatus that can convert mechanical energy into electricity and its' working principle is based on the law of electromagnetic induction and the law of electromagnetic force. Therefore, the general principle of its construction lies in that: magnetic circuit and electric circuit constructed by magnetic conductive material and electric conductive material respectively can have mutual electromagnetic induction to each other to generate electromagnetic power so as to achieve the purpose of energy conversion. Generally, the stator and the rotor of generator can be connected and assembled by means of bearing(s) and end cover(s) so that rotor can rotate in the stator or the rotor can perform relative rotation with respect to the stator and cuts magnetic induction lines so as to generate induced electromotive force which will be led out by connecting terminal(s) into a circuit to generate current.

The prior art electric machinery can be mainly classified into two types. One type features that magnets (classified into permanent magnet and electromagnet) are outside and coils (i.e., conductor coils constituting armature component) are inside, wherein, in the magnetic induction lines generated by magnet, coils can rotate and cut magnetic induction lines; or alternatively magnets (classified into permanent magnet and electromagnet) are inside and coils (i.e., conductor coils constituting armature component) are outside, both of which can be called squirrel-cage traditional electric machinery. Another type features that magnets (classified into permanent magnet and electromagnet) are at one side or two sides of the coils (i.e., conductor coils constituting armature component) and the coils and the magnets perform relative rotation around a common rotating shaft, wherein the magnets can rotate and the coils can be stationary or vice versa. Such kind of electric machinery's diameter is much larger than its thickness and its outlook appears like a disc, so it can be called disc electric machinery. The common feature of the disc electric machinery is that the arrangement direction of the magnets and the coils are perpendicular to common axis and the magnets and the coils are arranged along radial plane structure. Furthermore, the diameter of the disc electric machinery is much larger than its thickness. The above description are common features of the conventionally known prior art.

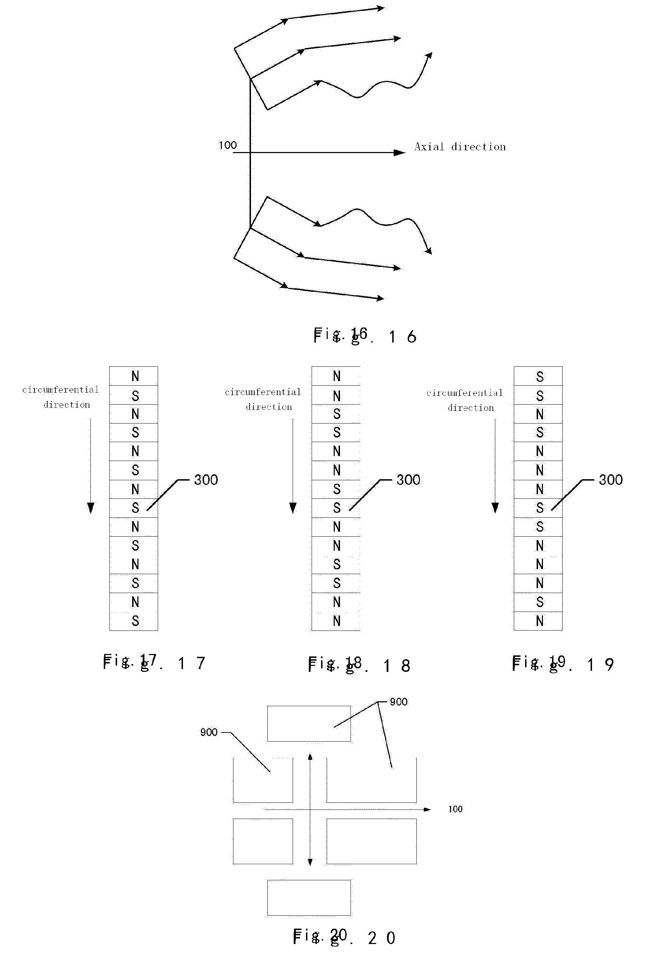

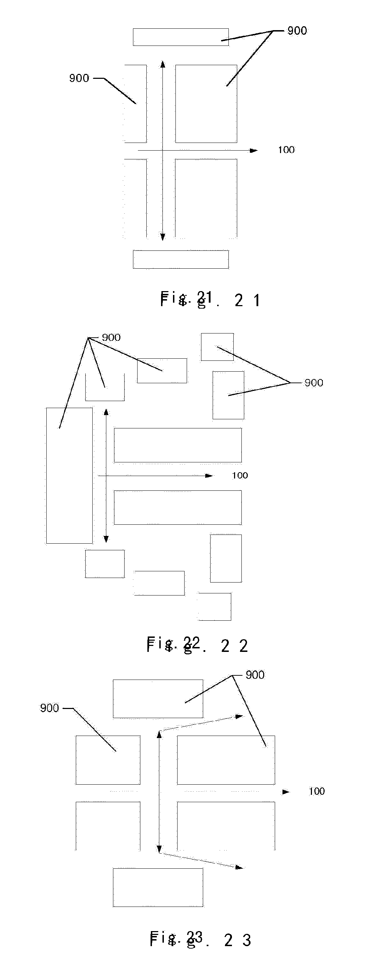

The structure of the squirrel-cage electric machinery has been well established through hundreds years of development. As to the structure itself, there is not much room to be improved and the power density per volume unit cannot be enhanced any further. Compared to squirrel-cage electric machinery, disc electric machinery is more novel and has many more advantages. However, there are still deficiencies in the disc electric machinery of prior art, such as:
1. If the disc electric machinery employs a structure with only one stator and only one rotor, it's power density is still not high, which is not comply with the development tendency of the modern electric machinery design. Meanwhile, where the application space is limited, for example, as shown in Fig.20, the space for seating electric machinery is limited because of the presence of obstacle 900, therefore the radial dimension of the disc electric machinery cannot be enlarged and the disc electric machinery cannot be made larger, which means the room to increase coil turn number is very limited. Therefore, it is almost impossible to greatly increase the single-machine power of the disc electric machinery when the possibility of changing or not changing conditions such as intensity of the magnetic force of the magnetic pole and the like is limited. Thus the function and power achieved by the disc electric machinery is quite limited.
2. If disc electric machinery employs structure with plurality of stators and plurality of rotors, the single machine power of the electric machinery can be enhanced, however, the axial width of the disc electric machinery has to be increased in order to house the plurality of stators and rotors. Where the application space is restricted, for example, as shown in Fig.21, the presence of obstacle 900 will limit the space to place the electric machinery so that the axial width of the disc electric machinery cannot be made quite large, therefore the function and power achieved by the disc electric machinery will be substantially affected.
3. Under the restriction of special application space, for example, as shown in Fig.22, the presence of obstacle 900 makes the application space dimension quite limited; neither the radial dimension nor the axial dimension of the disc electric machinery can be increased so that it is impossible to enhance the power and function of the disc electric machinery.

With the development of modern society and life, there increasingly emerge more and more novel fields that need electric machinery. Meanwhile, this also places new requirements on electric machinery in terms of function to dimension. For example, in the field of human body bionic engineering, in order to simulate organ parts of human body, it needs to install some small electric motors. However, since the space used to install the electric motors is quite limited, this places new requirement on the design of electric machinery. That is, special space limitation places new requirement on the design of electric motor, such electric motor not only needs to adapt to the limitation of special spatial form, but also need to achieve high power performance and function. This demands new requirement to innovate in the existing structure of electric machinery. In addition, for example, in the field of new energy power generation, some new application needs to place the generator into location with extremely harsh and limited spatial form range, meanwhile the generator also need to achieve sufficient single-machine generation power. All these new fields raise new requirements to innovation in the existing structure of electric machinery.

All these new requirements cannot be solved by all the known prior art. It requires complete innovation in the structure and form of the electric machinery to solve these requirements.

### SUMMARY OF THE INVENTION

The technical problem to be solved by the present invention is to radically innovate in the structure and form of electric machinery and change the structure and shape of the magneto-electricity system unit to adapt to the requirements of special application space, and increase the number of magneto-electricity system units and changes their connecting structure in creative way to raise space utilization rate, so as to promote the power of the electric machinery and thereby achieve the technique effect of enhancing the magnetism-electricity conversation capability of electric machinery. The present invention provide an anomalous electric machinery which has high unit power density and also can meet special space and shape requirement of different application objects. Therefore, the application range of the electric machinery can be expanded and the electric machinery power can be increased. The present invention can apply to anomalous electric motor and anomalous generator, and also invokes great renovation in the generator and electric motor with existing form.

The technical solutions of the preset invention are as follows:
As a first technical solution of the present invention, an anomalous electric machinery comprises armature component(s) and magnetic pole component(s) which perform a relative movement around a common axis, wherein the armature component and the magnetic pole component constitute an magneto-electricity system unit, wherein the magneto-electricity system unit can form an axisymmetric anomalous curved shape of the unit around the common axis, and the axisymmetric anomalous curved shape of the unit is not a plane that is substantially perpendicular to the common axis.
As a second technical solution of the present invention, an anomalous electric machinery comprises at least two armature components and at least two magnetic pole components, wherein one of said armature components and one of said magnetic pole components constitute one magneto-electricity system unit; at least two of said magneto-electricity system units are arranged side by side and form side-by-side magneto-electricity system unit; the armature component and the magnetic pole component of each of the magneto-electricity system units can perform a relative movement around a common axis, wherein the side-by-side magneto-electricity system unit comprises at least one magneto-electricity system unit that forms an axisymmetric anomalous curved shape of the unit around the common axis and the axisymmetric anomalous curved shape of the unit is not a plane perpendicular to the common axis or appears to be approximately perpendicular to the common axis.

Furthermore, in the first technical solution of the anomalous electric machinery and the second technical solution of the anomalous electric machinery, the shape of the axisymmetric anomalous curved shape of the unit along the common axis in axial direction exhibits a curved shape of the unit that warped in depth and/or a curved shape of the unit that bent and extended, and/or
the shape of the axisymmetric anomalous curved shape of the unit along the common axis in radial direction exhibits a curved shape of the unit that warped in depth and/or a curved shape of the unit that bent and extended.

As a third technical solution of the present invention, an anomalous electric machinery comprises at least two armature components and at least two magnetic pole components, wherein one of said armature components and one of said magnetic pole components constitute one magneto-electricity system unit; the armature component and the magnetic pole component of each magneto-electricity system unit perform a relative movement around a common axis, wherein at least two of the magneto-electricity system units are connected and form axisymmetric anomalous curved shape around the common axis, the axisymmetric anomalous curved shape of the unit is not a plane perpendicular to the common axis or appears to be approximately perpendicular to the common axis.

Furthermore, in the third technical solution of the anomalous electric machinery, the anomalous electric machinery comprises at least three armature components and at least three magnetic pole components, wherein one of said armature components and one of said magnetic pole components constitute one magneto-electricity system unit; the armature component and the magnetic pole component of each magneto-electricity system unit perform a relative movement around a common axis, wherein the shape formed by connecting the at least three of said magneto-electricity system units along the common axis in axial direction exhibits a shape in which one curved unit of the magneto-electricity system branches into at least two curved units of the magneto-electricity system; or
the shape formed by connecting the at least three of said magneto-electricity system units along the common axis in radial direction exhibits a shape in which one curved unit of the magneto-electricity system branches into at least two curved units of the magneto-electricity system or
at least three of said magneto-electricity system units are sequentially connected, form an axisymmetric anomalous curved shape around the common axis, and the axisymmetric anomalous curved shape of the at least three sequentially connected units is not a plane perpendicular to the common axis or appears to be approximately perpendicular to the common axis.

As a fourth technical solution of the present invention, the anomalous electric machinery comprises at least three armature components and at least three magnetic pole components, wherein, one of said armature components and one of said magnetic pole components constitute one magneto-electricity system unit, and the armature component and the magnetic pole component of each magneto-electricity system unit perform a relative movement around a common axis,
at least two magneto-electricity system units are formed in a group by connecting the at least two magneto-electricity system units from one end to another so that the group form an axisymmetric anomalous curved shape around the common axis; and the axisymmetric anomalous curved shape is not a plane perpendicular to the common axis or appears to be approximately perpendicular to the common axis, at least one more magneto-electricity system unit is arranged side by side to the above said axisymmetric anomalous curved shape of the said group comprising the said at least two connected magneto-electricity system units.

Furthermore, in the fourth technical solution of the anomalous electric machinery, the group of magneto-electricity system units forming the axisymmetric anomalous curved shape around the common axis comprise at least three of the magneto-electricity system units, and the shape formed by connecting the at least three of the magneto-electricity system units in axial direction exhibits a shape in which one unit of the magneto-electricity system branches into at least two units of the magneto-electricity system; or
the shape formed by connecting at least three of said magneto-electricity system units along the common axis in radial direction exhibits a shape in which one magneto-electricity system unit branches into at least two magneto-electricity system units ; or
at least three of said magneto-electricity system units are sequentially connected, form axisymmetric anomalous curved shape around the common axis, and the axisymmetric anomalous curved shape of the three sequentially connected units is not a plane perpendicular to the common axis or appears to be approximately perpendicular to the common axis.

Furthermore, in the fourth technical solution of the anomalous electric machinery, the side-by-side magneto-electricity system comprises at least one magneto-electricity system unit according to the first technical solution.

Furthermore, the magneto-electricity system units form an axisymmetric anomalous curved shape around the common axis, and the shape of the axisymmetric anomalous curved shape along the common axis in axial direction exhibits a curved shape that warped in depth and/or a curved shape that bent and extended, and/or
the axisymmetric anomalous curved shape of the units along the common axis in radial direction exhibits a curved shape that warped in depth and/or a curved shape that bent and extended.

Further, in the third technical solution of the anomalous electric machinery or in the fourth technical solution of the anomalous electric machinery, the at least two of the magneto-electricity system units constitute the axisymmetric anomalous curved shape, wherein the shape of the at least one magneto-electricity system unit along the common axis in axial direction exhibits a curved shape that warped in depth and/or a curved shape that bent and extended, and/or
the shape of the at least one magneto-electricity system unit along the common axis in radial direction exhibits a curved shape that warped in depth and/or a curved shape that bent and extended.

Furthermore, in the third technical solution of the anomalous electric machinery or in the fourth technical solution of the anomalous electric machinery, the at least three of the magneto-electricity system units constitute the axisymmetric anomalous curved shape, wherein the shape of the at least one magneto-electricity system unit along the common axis in axial direction exhibits a curved shape that warped in depth and/or a curved shape that bent and extended, and/or
the shape of the at least one magneto-electricity system unit along the common axis in radial direction exhibits a curved shape that warped in depth and/or a curved shape that bent and extended.

Furthermore, in all the above technical solutions, the common axis is a shaft that connecting with at least one of the magneto-electricity system unit; or, the common axis is an axis common to each of the magneto-electricity system units.

Furthermore, in all the above technical solutions, the armature component is stator and the magnetic pole component is rotor; or alternatively, the armature component is rotor, and the magnetic pole component is stator.

Moreover, the armature component can be realized by the following three technical solutions:
1. The armature component comprises a first armature, the magnetic pole component comprises a first magnetic group, and there is magnetic gap between the first armature and the first magnetic group;
   The first magnetic group employs permanent magnets; the first magnetic group is provided with a plurality of permanent magnets at end face near the first armature; and the N poles and the S poles of the plurality of permanent magnets are alternately arranged along circumferential direction rotating around the common axis; or
   the first magnetic group employs electromagnets; the first magnetic group is provided with a plurality of electromagnets at end face near the first armature; external current flows through coil conductors wound around the electromagnets so that the electromagnets can have magnetic property and that the N poles and the S poles of the plurality of electromagnets are alternately arranged along circumferential direction rotating around the common axis.
2. The armature component comprises a second armature and a third armature, the magnetic pole component comprises a second magnetic group, the second magnetic group is located between the second armature and the third armature, and there are magnetic gaps between the second magnetic group and the second armature and the third armature;
   The second magnetic group employs permanent magnets; the second magnetic group is provided with a plurality of permanent magnets at both end faces near the second armature and the third armature; the N poles and the S poles of the plurality of permanent magnets are alternately arranged along circumferential direction rotating around the common axis; or
   the second magnetic group employs electromagnets; the second magnetic group is provided with a plurality of electromagnets at both end faces near the second armature and the third armature; external current flows through the coil conductors wound around the electromagnets so that the electromagnets can have magnetic property and that the N poles and the S poles of the plurality of electromagnets are alternately arranged along circumferential direction rotating around the common axis.
3. The armature component comprise a fourth armature, the magnetic pole component comprises a third magnetic group and a fourth magnetic group, the fourth armature is located between the third magnetic group and the fourth magnetic group, and there are magnetic gaps between the fourth armature and the third magnetic group and the fourth magnetic group;
   The third magnetic group and the fourth magnetic group employ permanent magnets; the third magnetic group and the fourth magnetic group are provided with a plurality of permanent magnets at end faces near the fourth armature; the N poles and the S poles of the plurality of permanent magnets are alternately arranged along circumferential direction rotating around the common axis; or
   the third magnetic group and the fourth magnetic group employ electromagnets; the third magnetic group and the fourth magnetic group are provided with a plurality of electromagnets at both end faces near the fourth armature; external current flows through the coil conductors wound around the electromagnets so that the electromagnets can have magnetic property and that the N poles and the S poles of the plurality of electromagnets are alternately arranged along circumferential direction rotating around the common axis.

In all the technical solutions comprising at least two armature components, at least two of the armature components are connected in series and/or in parallel to each other.

The beneficial effects of the present invention are as follows: the technical solutions of the present invention enhance the magneto-electricity system space utilization rate by increasing the number of magneto-electricity system units and changing its connecting structure and space arrangement with new innovative technique, and realize the technical effects of effectively increased power of electric machinery and thereby promote magneto-electric conversion function or enhance the technical effects of mutual conversion between electric energy and mechanical energy of the electric machinery. The present invention provide an anomalous electric machinery which has high unit power density and also can adapt to special space and shape requirements of different application objects. Therefore, the application range of the electric machinery can be expanded and the electric machinery power can be increased. Thereby, it is no longer subjected to the limitation and restrictions of the space of special applications.

The present invention provides a novel concept of anomalous electric machinery which can play important role in certain application fields. The present invention is a radical innovation in structure and form of electric machinery. It is not only innovation in structure and form of electric machinery, but also breakthrough and renovation of the concept of electric machinery design. The present invention solves the problem how to effectively increase the power density of electric machinery and enhance the function of electric machinery under the restriction of certain shape space. Particularly where there (is) are obstacle(s) in the restricted space used to implement electric machinery, by using unique embedded design around the obstacle and creatively forming special structure and form of the electric machinery, such problem can be solved and the electric machinery power can be substantially increased and the functions effected by electric machinery can also be greatly extended. The electric machinery of the present invention can play important role in the fields of ocean power generation, artificial intelligent bionics, and human body bionic joint or bionic robots and the like. The electric machinery of the present invention can be adapted to the demands of certain shape and have special electric machinery design and application under certain space restriction.

### BRIEF DESCRIPTION OF THE DRAWINGS

Fig.1 is a schematic view showing the structure of the anomalous electric machinery according to the first technical solution of the present invention;
Fig.2 is a schematic view showing the structure of a first embodiment of the anomalous electric machinery according to the third technical solution of the present invention;
Fig.3 is a schematic view showing the structure of the first embodiment of the anomalous electric machinery according to the fourth technical solution of the present invention;
Fig.4 is a schematic view showing the structure of a second embodiment of the anomalous electric machinery according to the third technical solution of the present invention;
Fig.5 is a schematic view showing the structure of a third embodiment of the anomalous electric machinery according to the thrid technical solution of the present invention;
Fig.6 is a schematic view showing the structure of the second embodiment of the anomalous electric machinery according to the fourth technical solution of the present invention;
Fig.7 is a schematic view showing the structure of the first embodiment of magneto-electricity system unit constituted by electromagnets;
Fig.8 is a schematic view showing the structure of the second embodiment of magneto-electricity system unit constituted by electromagnets;
Fig.9 is a schematic view showing the structure of the third embodiment of magneto-electricity system unit constituted by electromagnets;
Fig.10 is a schematic view showing that the sectional shape of the magneto-electricity system unit of the anomalous electric machinery along axial direction exhibits bent and extended;
Fig.11 is a schematic view showing that the sectional shape of the magneto-electricity system unit of the anomalous electric machinery along axial direction exhibits warped in depth;
Fig.12 is a schematic view showing that the sectional shape of the magneto-electricity system unit of the anomalous electric machinery along radial direction exhibits warped in depth;
Fig.13 is a schematic view showing that the sectional shape of the magneto-electricity system unit of the anomalous electric machinery along radial direction exhibits bent and extended;
Fig.14 is a schematic view showing that the sectional shape of the anomalous electric machinery according to the first technical solution of the present invention exhibits warped in depth;
Fig.15 is a schematic view showing that the sectional shape of the anomalous electric machinery according to the first technical solution of the present invention exhibits bent and extended;
Fig.16 is a schematic view showing that the sectional shape of the magneto-electricity system unit of the anomalous electric machinery exhibits branching;
Fig.17 is a schematic view showing the constitution of the first embodiment of the magnetic pole component according to the present invention;
Fig.18 is a schematic view showing the constitution of the second embodiment of the magnetic pole component according to the present invention;
Fig.19 is a schematic view showing the constitution of the third embodiment of the magnetic pole component according to the present invention;
Fig.20 is a schematic view showing that technical deficiency that the prior art disc electric machinery is subject to the radial space restriction of application object.
Fig.21 is a schematic view showing that technical deficiency that the prior art disc electric machinery is subject to the axial space restriction of application object.
Fig.22 is a schematic view showing that technical deficiency that the prior art disc electric machinery is subject to the radial and axial space restriction of application object.
Fig.23 is a schematic view showing how the technical solution of the present invention solve the technical deficiency shown in Fig.20.
Fig.24 is a schematic view showing how the technical solution of the present invention solve the technical deficiency shown in Fig.21.
Fig.25 is a schematic view showing how the technical solution of the present invention solve the technical deficiency shown in Fig.22.

### DETAILED DESCRIPTION OF THE INVENTION

The principles and features of the present invention will be described in more detail in conjunction with the attached drawings. The examples are given to explain the present invention, not to restrict the scope of the present invention.

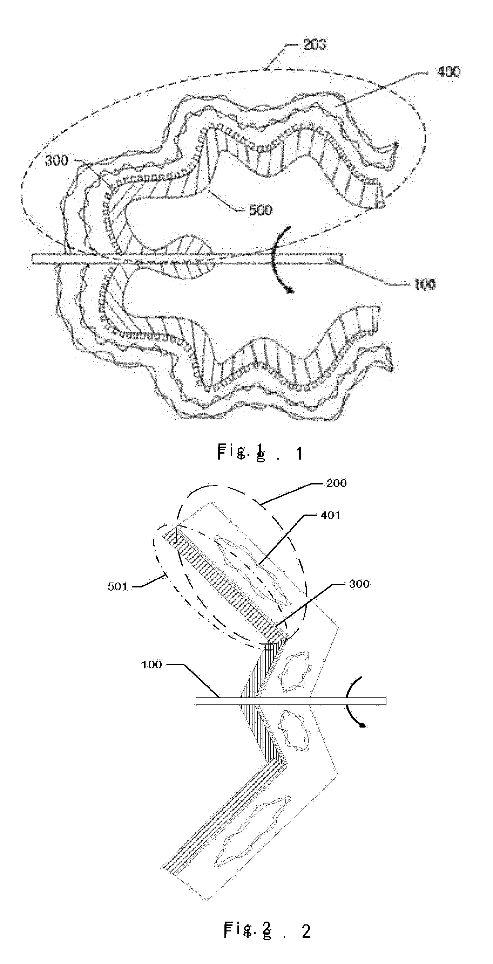

Referring to Fig.1, as the first technical solution of the present invention, the anomalous electric machinery comprises armature component(s) 400 constituted by armature(s), magnetic pole component(s) 500 constituted by magnetic group(s). The armature component 400 and the magnetic pole component 500 can perform a relative movement around their common axis 100. The armature component 400 and the magnetic pole component 500 can constitute a magneto-electricity system unit 203 which can form an axisymmetric anomalous curved shape around the common axis 100. The axisymmetric anomalous curved shape of the magneto-electricity system unit 203 is not a plane perpendicular to the common axis 100 or appears to be approximately perpendicular to the common axis 100. The technical solution of the present invention can make full use of the restricted space of the application object. The armature component 400 and the magnetic pole component 500 can be arranged adapting to variations in radial dimension and/or axial dimension in the restricted space range as much as possible, thereby the power of the electric machinery can be increased and thus the functions of the electric machinery can be enhanced. That is to say, if the electric machinery is generator, then the function of magnetism-electricity conversion can be enhanced; if the electric machinery is electric motor, then the function of the conversion from electric energy into mechanical energy can be enhanced.

As a second technical solution of the present invention, an anomalous electric machinery comprises at least two armature components and at least two magnetic pole components, wherein one of said armature components and one of said magnetic pole components constitute one magneto-electricity system unit; at least two of said magneto-electricity system units are arranged side by side and form side-by-side magneto-electricity system unit; the armature component and the magnetic pole component of each of the magneto-electricity system units can perform a relative movement around a common axis. Wherein, the side-by-side magneto-electricity system unit comprises at least one magneto-electricity system unit 203 that forms an axisymmetric anomalous curved shape around the common axis 100 and the axisymmetric anomalous curved shape of the at least one magneto-electricity system unit 203 is not a plane perpendicular to the common axis 100 or appears to be approximately perpendicular to the common axis 100. That is to say, the side-by-side magneto-electricity system unit comprises at least one magneto-electricity system unit 203 as shown in Fig.1. According to the requirements of the application space, at least one magneto-electricity system unit 203 is arranged in rows of magneto-electricity system units adapting to the spatial variation in specific circumstance so that the restricted application space of the application object can be fully utilized and the utilization rate of certain space can be improved and thus the electric machinery power can be increased. This is also a creative method provided by the present invention that can raise the electric machinery power.

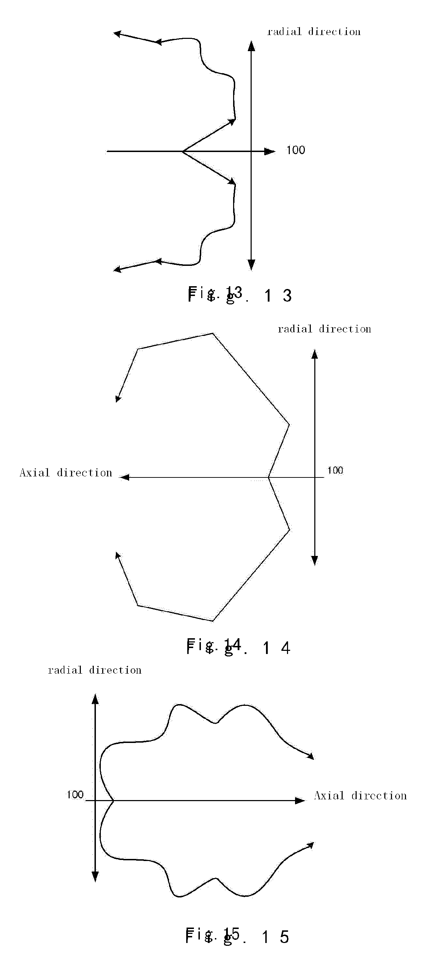

One of the embodiments is shown in Fig.14 and Fig.15. The shape of the axisymmetric anomalous curved shape along common axis 100 in axial direction exhibits a curved shape that warped in depth and/or a curved shape that bent and extended; and/or, the shape of the axisymmetric anomalous curved shape along common axis 100 in radial direction exhibits a curved shape that warped in depth and/or a curved shape that bent and extended. In the figures, the line segment or curve segment with arrow schematically represents the orientation and shape of the radial sectioning of the magneto-electricity system in axial longitudinal section.

As a third technical solution of the present invention, the anomalous electric machinery comprises at least two armature components and at least two magnetic pole components, wherein one of said armature components and one of said magnetic pole components constitute one magneto-electricity system unit; the armature component and the magnetic pole component of each magneto-electricity system unit perform a relative movement around a common axis. At least two of the magneto-electricity system units are connected and form axisymmetric anomalous curved shape around the common axis, the axisymmetric anomalous curved shape is not a plane perpendicular to the common axis or appears to be approximately perpendicular to the common axis. The third technical solution of the anomalous electric machinery can refer to the first embodiment, second embodiment and third embodiment shown in Fig.2, Fig.4 and Fig.5.

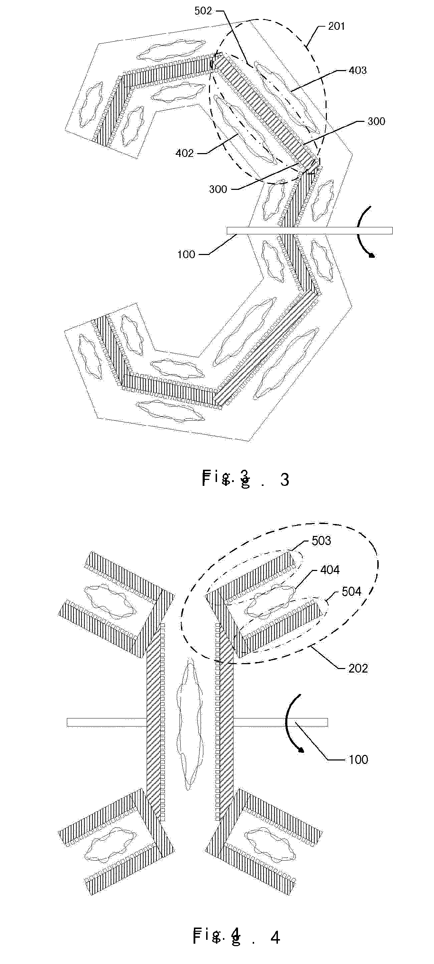

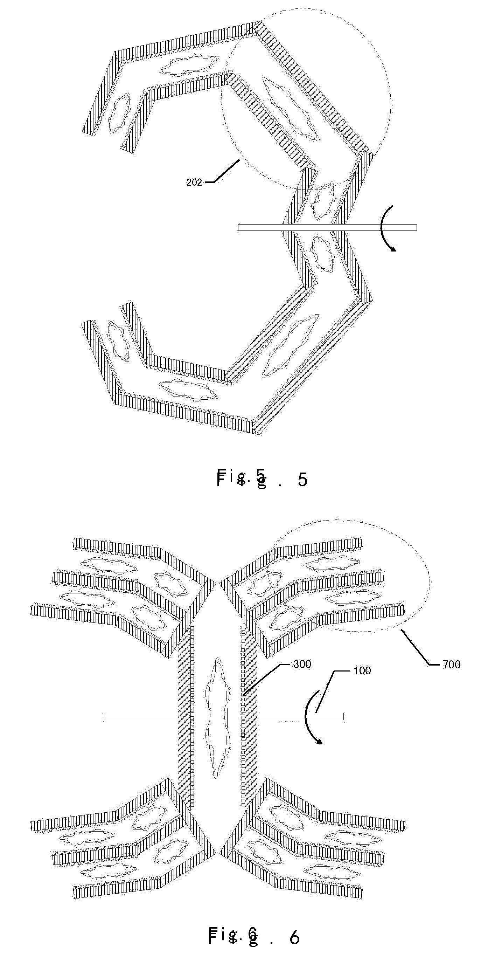

In the third technical solution of the anomalous electric machinery, the anomalous electric machinery can comprise at least three magneto-electricity system units. Referring to Fig.4, the shape formed by connecting the at least three magneto-electricity system units along common axis in axial direction exhibits a shape in which one curved unit of the magneto-electricity system branches into at least two curved units of the magneto-electricity system; or the shape formed by connecting the at least three magneto-electricity system units along common axis in radial direction exhibits a shape in which one curved unit of the magneto-electricity system branches into at least two curved units of the magneto-electricity system. Alternatively, referring to Fig.2, Fig.5, at least three magneto-electricity system units are connected sequentially, form an axisymmetric anomalous curved shape around a common axis, the axisymmetric anomalous curved shape is not a plane perpendicular to the common axis or appears to be approximately perpendicular to the common axis.

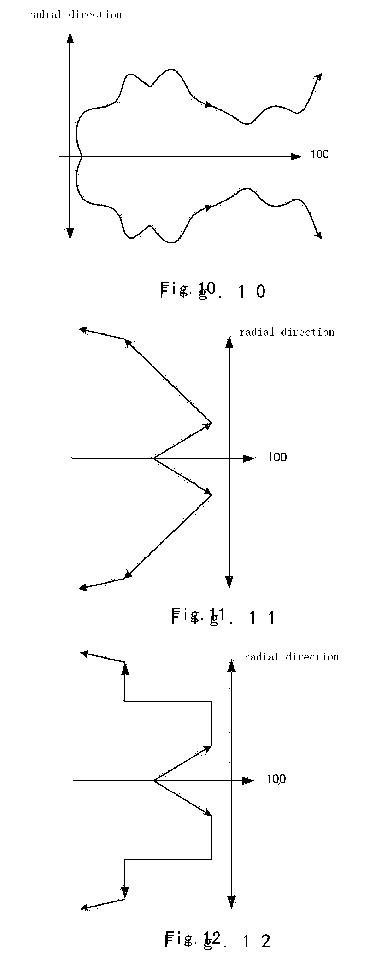

In the third technical solution of the anomalous electric machinery, according to the requirements of application space, a plurality of magneto-electricity system units are arranged to enhance the function of the electric machinery. It is mainly exhibits in the following two aspects:
On one hand, where the application object has long, narrow and curved application space in radial direction, a plurality of magneto-electricity system units are sequentially connected conforming to the variations of the orientation of the application space, so the technical effects of enhancing the function of the electric machinery by increasing the number of magneto-electricity system units can be achieved. Referring to Fig.2, Fig.5, and the schematic cross-sectional view of Fig.10 and Fig.11, the line segment or curve segment with arrow schematically represents the orientation and shape of the radial sectioning of the magneto-electricity system in axial longitudinal section.
On the other hand, according to the space feature that is broadened in radial direction, the number of magneto-electricity system units can be increased by providing end branching at relatively wider location, so as to achieve the technical effect of enhancing of the function of the electric machinery. Referring to Fig.4 and the schematic cross-sectional view of Fig.16, the line segment or curve segment with arrow schematically represents the orientation and shape of the radial sectioning of the magneto-electricity system in axial longitudinal section.

Besides, according to the space feature of the application object, adapting to the dimensional variations of the restricted application space, the method of sequentially connecting a plurality of magneto-electricity system units end-to-end and the method of branching can be used in coordination with each other, in order to raise the space utilization rate as much as possible, and enhance the function of the electric machinery.

As a fourth technical solution of the present invention, the anomalous electric machinery comprises at least three armature components and at least three magnetic pole components, wherein, one of said armature components and one of said magnetic pole components constitute one magneto-electricity system unit, and the armature component and the magnetic pole component of each magneto-electricity system unit perform a relative movement around a common axis. At least one of said magneto-electricity system units constitute a magneto-electricity system, wherein at least two of the magneto-electricity system are arranged side by side to form a side-by-side magneto-electricity system. The side-by-side magneto-electricity system comprises at least one row of magneto-electricity systems formed by connecting at least two magneto-electricity system units; the magneto-electricity system forms an axisymmetric anomalous curved shape around the common axis; and the axisymmetric anomalous curved shape is not a plane perpendicular to the common axis or appears to be approximately perpendicular to the common axis. That is to say, the side-by-side magneto-electricity system unit comprises at least one row of magneto-electricity system formed by connecting more than one magneto-electricity system unit to each other. According to the requirements of the application space, at least one of the above mentioned magneto-electricity system units is arranged in rows of magneto-electricity systems based on the spatial variation in specific circumstance so that the restricted application space of the application object can be fully utilized and the utilization rate of certain space can be improved and thus the electric machinery power can be increased. This is also a creative method provided by the present invention that can raise the electric machinery power. The fourth technical solution of the anomalous electric machinery can refer to the first embodiment and the second embodiment shown in Fig.3 and Fig.6.

In the fourth technical solution of the above mentioned anomalous electric machinery, the magneto-electricity system forming an axisymmetric anomalous curved shape around the common axis comprises at least three magneto-electricity system units. As seen in Fig.6 and the schematic cross sectional view shown in Fig 16, the shape formed by connecting at least three magneto-electricity system units along the common axis in axial direction exhibits the shape in which one curved unit of the magneto-electricity system branches into at least two curved units of the magneto-electricity system; or, the shape formed by connecting the at least three magneto-electricity system units along the common axis in radial direction exhibits the shape in which one curved unit of the magneto-electricity system branches into at least two curved units of the magneto-electricity system. Alternatively, as can be seen in Fig.3, the at least three magneto-electricity system units are sequentially connected; form an axisymmetric anomalous curved shape around the common axis, and the anomalous curved shape of the at least three magneto-electricity system units is not a plane perpendicular to the common axis or appears to be approximately perpendicular to the common axis.

In the arrangement of rows of side-by-side magneto-electricity systems according to the fourth technical solution, there is arranged at least one row of magneto-electricity systems forming an axisymmetric anomalous curved shape around the common axis. The power of the electric machinery can be increased by disposing a plurality of magneto-electricity system units. The cross-section of the row of the magneto-electricity system can be seen in Fig.10, Fig.11, Fig.12, Fig.13 and Fig.16, which will not be described in more detail.

Alternatively, in the fourth technical solution of the anomalous electric machinery, the side-by-side magneto-electricity system can comprise at least one magneto-electricity system unit 203 as that in the anomalous electric machinery according to the first technical solution shown in Fig.1. The cross-section of one embodiment of this magneto-electricity system unit can be seen in Fig.14 and Fig.15, which will not be described in more detail.

In addition, in the third technical solution or the fourth technical solution of the anomalous electric machinery, when at least two magneto-electricity system units form the axisymmetric anomalous curved shape, the shape of at least one of the magneto-electricity system units along the common axis in axial direction can exhibits a curved shape that warped in depth and/or a curved shape that bent and extended; and/or, the shape of the at least one of magneto-electricity system units along the common axis in radial direction exhibits a curved shape that warped in depth and/or a curved shape that bent and extended. Diagrammatic view of one embodiment of the above part can be seen in Fig.12 or Fig.13, wherein the line segment or curve segment with arrow schematically represents the orientation and shape of the radial sectioning of the magneto-electricity system in axial longitudinal section.

Furthermore, in the third technical solution or the fourth technical solution of the anomalous electric machinery, when at least three magneto-electricity system units form the axisymmetric anomalous curved shape, the shape of at least one of the magneto-electricity system units along the common axis in axial direction exhibits a curved shape that warped in depth and/or a curved shape that bent and extended; and/or, the shape of the at least one of magneto-electricity system units along the common axis in radial direction exhibits a curved shape that warped in depth and/or a curved shape that bent and extended. In the figures, the line segment or curve segment with arrow schematically represents the orientation and shape of the radial sectioning of the magneto-electricity system in axial longitudinal section.

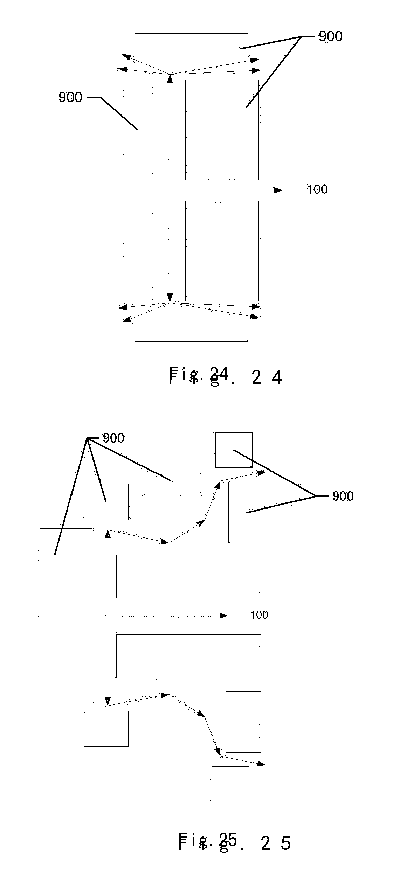

Because the anomalous electric machinery according to the present invention can creatively make full use of space feature to include a plurality of magneto-electricity system units, the power of electric machinery can be increased and the electric-magnetic conversion output efficiency of single electric machinery can be enhanced. Meanwhile, because the axisymmetric anomalous curved shape is formed by connecting a plurality of magneto-electricity systems, the electric machinery of the present invention can adapt to the space restriction requirement and shape requirement of different application objects. For example, as described in background section, as shown in Fig.20, Fig.21 and Fig.22, the difficulties met by the electric machinery in application process can be solved by the unique structure and unique technique of the invention according to the solution shown in Fig.23, Fig.24 and Fig.25. It should be noted that the line segment or curve segment with arrow schematically represents the orientation and shape of the radial sectioning of the magneto-electricity system in axial longitudinal section.

Furthermore, the common axis can be a shaft that is connected with at least one magneto-electricity system unit. Alternatively, the common axis might neither be actual shaft, nor be connected with any magneto-electricity system, but it is just an axis common to each magneto-electricity system unit. That is to say, the common axis might not be an actual shaft, but can just be a common geometrical axis which is surrounded by all the magneto-electricity system.

Furthermore, in all the above technical solutions, the armature component is stator and the magnetic pole component is rotor; or alternatively, the armature component is rotor, and the magnetic pole component is stator.

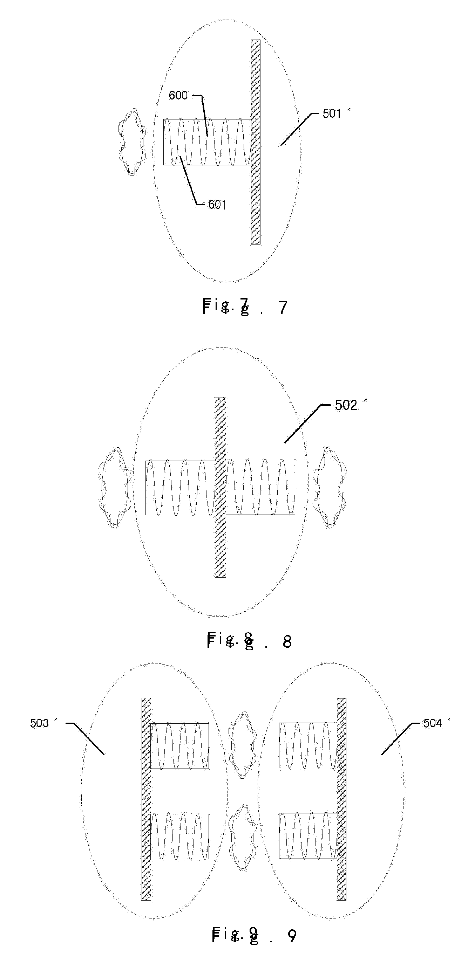

The magnetic pole component in the magneto-electricity system unit can employ either permanent magnets or electromagnets. Wherein, the permanent magnet material itself can keep its magnetic property feature in long term, while electromagnet can generate magnetic force by external energization. The magneto-electricity system unit of the present invention can have the following embodiments, and the detailed constitution of the magneto-electricity system unit will be described taking generator as an example.
1. First embodiment: in the magneto-electricity system unit, the armature component comprises a first armature, the magnetic pole component comprises a first magnetic group, and there is magnetic gap between the first armature and the first magnetic group.
   If the magnetic group employs permanent magnets, as can be seen in Fig.2, the first magnetic group 501 employs permanent magnet, the first magnetic group 501 is provided with a plurality of permanent magnets 300 at end face near the first armature. The N poles and the S poles of the plurality of permanent magnets 300 are alternately arranged along circumferential direction rotating around the common axis. The alternating arrangement of the poles can be seen in the schematic view of the embodiment in Fig.17. Driven by the rotation of the rotating shaft (i.e., the common axis 100 of the first magnetic group 501 and the first armature 401), the first magnetic group 501 and the first armature 401 can perform relative rotation movement, i.e., the first magnetic group 501 is rotating while the first armature 401 is stationary, or vice versa. In this way, current output can be generated by changing flux and cutting magnetic induction lines. As to the arrangement of the N poles and S poles along circumferential direction rotating around the common axis, combination of various arrangements can be made according to the specific application object in order to adapt to the requirements of different application demands. Two exemplary arrangements of them are shown in Fig.18 and Fig.19.
   If the magnetic group employs electromagnets, as shown in Fig.7, the first magnetic group 507' employs electromagnets, and the first magnetic group 501' is provided with a plurality of electromagnets at end face near the first armature. External current can flow through the coil conductors 600 wound around the electromagnets so that the electromagnets can have magnetic property and the N poles and the S poles of the plurality of the electromagnets are alternately arranged along circumferential direction rotating round the common axis. The electromagnet comprises magnet yoke 601 and electrified coil conductors 600(the electrified coil conductors are annular conductors, coils). Once external energization, external current can flow through the electrified coil conductors 600 wound around the magnet yoke 601 to generate N pole and S pole, so that the first magnetic group 501' can have magnetic property and then generate current output by changing flux and cutting magnetic induction lines and etc..
2. Second embodiment: the armature component in the magneto-electricity system unit comprises a second armature and a third armature, and the magnetic pole component comprises a second magnetic group. The second magnetic group is located between the second armature and the third armature, and there are magnetic gaps between the second magnetic group and the second armature and the third armature.
   If the magnetic group employs permanent magnets, as can be seen in Fig.3, the second magnetic group 502 employs permanent magnets, and the second magnetic group 502 is provided with a plurality of permanent magnets at end face near the second armature 402 and at end face near the third armature 403. N poles and the S poles of the plurality of the permanent magnets 300 are alternately arranged along circumferential direction rotating round the common axis, as can be seen in Fig.7. In this embodiment, driven by the rotation of the rotating shaft (i.e., the common axis 100 of the second magnetic group 502, the second armature 402 and the third armature 403), the second magnetic group 502 and the second armature 402 and the third armature 403 can perform relative rotation movement, i.e., if the second magnetic group 502 is rotating, the second armature 402 and the third armature 403 is stationary, or vice versa. In this way, current output can be generated by changing flux and cutting magnetic induction lines. As to the arrangement of the N poles and S poles along the circumferential direction rotating around the common axis, combination of various arrangements can be made according to the specific application object in order to adapt to the requirements of different application demands. Two exemplary arrangements of them are shown in Fig.18 and Fig.19.
   If the magnetic group employs electromagnets, as shown in Fig.8, the second magnetic group 502' employs electromagnets and the second magnetic group 502' is provided with a plurality of electromagnets at two end faces near the second armature and the third armature. External current flow through the coil conductors wound around the electromagnet so that the electromagnet can have magnetic property, and so that the N poles and the S poles of the plurality of electromagnets are alternatively arranged along circumferential direction rotating around a common axis. Its principle is the same with the working principle of the magnetic group constituted by electromagnets employed in the first embodiment, so it will note be further described herein.
   Comparing to the first embodiment, the second embodiment adds one more set of magneto-electricity system, and thus improves the power density of the anomalous electric machinery and enhances the output efficiency and function of the electric energy conversion.
3. Third embodiment: the armature component of the magneto-electricity system unit comprises a fourth armature; the magnetic pole component comprises a third magnetic group and a fourth magnetic group. The fourth armature is located between the third magnetic group and the fourth magnetic group, and there are magnetic gaps between the fourth armature and the third magnetic group and the fourth magnetic group.
   If the magnetic groups employ permanent magnets, as can be seen Fig.4 and Fig.5, both the third magnetic group 503 and the fourth magnetic group 403 employ permanent magnets. The third magnetic group 503 is provided with a plurality of permanent magnets 300 at end face near the fourth armature 404, and the fourth magnetic group 504 is provided with a plurality of permanent magnets 300 at end face near the fourth armature 404. The N poles and the S poles of the plurality of permanent magnets 300 are alternately arranged along circumferential direction rotating around the common axis. Their alternating arrangement can be seen in the schematic view of Fig.17. In the present embodiment, the third magnetic group 503, the fourth magnetic group 504 are driven by the rotation of the rotating shaft to make concentric circular rotation movement, while the fourth armature 404 is stationary, or alternatively, the fourth armature 404 can make rotation movement driven by the rotation of the rotating shaft so that the third magnetic group 503 and the fourth magnetic group 501 make relative rotation with respect to the fourth armature 404. Comparing to the first embodiment, this method increases the magnetic induction intensity B of unit area of induction coils. According to the Faraday' s law of electromagnetic induction δ = BLvsin θ, the magnitude of the induced current is in direct proportion to the induction intensity B, the length L of the conductors, the velocity of movement v and the sine of the included angle between the direction of movement and the direction of the magnetic line of force. By increasing the magnetic induction intensity B, the length L of the conductors cutting the magnetic lines of force, the cutting velocity v and cutting the magnetic line of force as perpendicular as possible (i.e. θ = 90°), the induced current can be increased. The present embodiment can enhance the magnetic-electric conversion capability by increasing the magnetic induction intensity B. The present invention also takes into accounts the unique structure design in which an angle is included between the magneto-electricity systems because of the restricted application space. As to the arrangement of the N poles and S poles along the circumferential direction rotating around the common axis, combination of various arrangements can be made according to the specific application object in order to adapt to the requirements of different application demands. Two exemplary arrangements of them are shown in Fig.18 and Fig.19.

If the magnetic groups employ electromagnets, as shown in Fig.9, both of the third magnetic group 503' and the fourth magnetic group 504' employ electromagnets. The third magnetic group 503' and the fourth magnetic group 504' are provided with a plurality of electromagnets at both end faces near the fourth armature. External current flow through the coil conductors wound around the electromagnet so that the electromagnet can have magnetic property, and so that the N poles and the S poles of the plurality of electromagnets are alternatively arranged along circumferential direction rotating around a common axis. Its principle is the same with the working principle of the magnetic group constituted by electromagnets employed in the first embodiment, so it will note be further described herein.

The working processes of the three embodiments of the magneto-electricity system units are described taking generator performing magnetism-electricity conversion as an example. Because generator and motor both can perform mutual conversion between electricity and magnetism and they can be retrofitted into each other, the anomalous electric machinery of the present invention can also apply to electric motor converting electricity into magnetism and then converting the electric energy into mechanical energy, which will not be described in more detail herein.

In order to serve different purposes, as to the arrangement of the N poles and S poles along circumferential direction rotating around the common axis, as can be seen Fig.17 and Fig.18, the N poles and S poles of the plurality of permanent magnets 300 can be arranged and spaced alternately according to certain rule. At least one S pole might be arranged after the same number of N pole(s) in order to meet the requirement of specific application demands.

In addition, in the various technical solutions of the magneto electric unit, the width per turn of the conductor coils constituting the armature component depends on the circumferential width dimension of the magnetic pole of the magnetic pole component corresponding to the coils, it can be the same with or different from the width dimension of the magnetic pole in order to be used in conjunction with other electrical fittings so as to meet different requirements of different application demands. The pitches between turns of the conductor coils also depend on the circumferential width dimension of the magnetic pole of the magnetic pole component corresponding to the coils, it can be the same with or different from the width dimension of the magnetic pole in order to be used in conjunction with other electrical fittings so as to meet different requirements of different application demands.

If the anomalous electric machinery of the present invention applies as generator, then each armature component can directly lead out the generated current through connecting terminals. Alternatively, at least two armature components are connected in series and/or at least two armature components are connected in parallel, and then the generated current will be led out through connecting terminals in order to meet different requirements of different application demands. Similarly, the anomalous electric machinery can apply as electric motor, and its working principle is also conversion operation between the electricity and magnetism, which will not be described in more detail.

The above description is only preferred embodiments of the present invention and is not intended to limit the present invention. All modifications, equivalent substitutions and improvements within the spirit and the principles of the present invention are construed as within the protection scope of the present invention.

## Claims

1. An anomalous electric machinery comprising an armature component and a magnetic pole component which perform a relative movement around a common axis, wherein the armature component and the magnetic pole component constitute an magneto-electricity system unit **characterized in that** said magneto-electricity system unit can form an axisymmetric anomalous curved shape of the unit around the common axis, and the axisymmetric anomalous curved shape of the unit is not a plane that is substantially perpendicular to the common axis.

2. An anomalous electric machinery, comprising at least two armature components and at least two magnetic pole components, wherein one of said armature components and one of said magnetic pole components constitute one magneto-electricity system unit; at least two of said magneto-electricity system units are arranged side by side and form side-by-side magneto-electricity system units; the armature component and the magnetic pole component of each of the magneto-electricity system units can perform a relative movement around a common axis, wherein the side-by-side magneto-electricity system units comprise at least one magneto-electricity system unit that forms an axisymmetric anomalous curved shape around the common axis, and the axisymmetric anomalous curved shape is not a plane perpendicular to the common axis or appears to be approximately perpendicular to the common axis.

3. The anomalous electric machinery according to claim 1 or 2, **characterized in that** the shape of the axisymmetric anomalous curved shape of the unit along the common axis in axial direction exhibits a curved shape that warped in depth and/or a curved shape that bent and extended, and/or
the shape of the axisymmetric anomalous curved shape of the unit along the common axis in radial direction exhibits a curved shape that warped in depth and/or a curved shape that bent and extended.

4. An anomalous electric machinery comprising at least two armature components and at least two magnetic pole components, wherein one of said armature components and one of said magnetic pole components constitute one magneto-electricity system unit; the armature component and the magnetic pole component of each magneto-electricity system unit perform a relative movement around a common axis, wherein at least two of the magneto-electricity system units are connected and form an axisymmetric anomalous curved shape around the common axis, the axisymmetric anomalous curved shape of the at least two of the magneto-electricity system units is not a plane perpendicular to the common axis or appears to be approximately perpendicular to the common axis.

5. The anomalous electric machinery according to claim 4, wherein it comprises at least three of said magneto-electricity system units, and the shape formed by connecting the at least three of said magneto-electricity system units along the common axis in axial direction exhibits a shape in which one curved unit of the magneto-electricity system branches into at least two curved units of the magneto-electricity system; or
the shape formed by connecting the at least three of said magneto-electricity system units along the common axis in radial direction exhibits a shape in which one curved unit of the magneto-electricity system branches into at least two curved units of the magneto-electricity system; or
at least three of said magneto-electricity system units are sequentially connected, form an axisymmetric anomalous curved shape around the common axis, and the axisymmetric anomalous curved shape of the at least three of said magneto-electricity system units is not a plane perpendicular to the common axis or appears to be approximately perpendicular to the common axis.

6. An anomalous electric machinery, comprising at least three armature components and at least three magnetic pole components, wherein, one of said armature components and one of said magnetic pole components constitute one magneto-electricity system unit, and the armature component and the magnetic pole component of each magneto-electricity system unit perform a relative movement around a common axis,
at least one of said magneto-electricity system units constitute a magneto-electricity system, wherein at least two of the magneto-electricity systems are arranged side by side to form side-by-side magneto-electricity systems, wherein the side-by-side magneto-electricity systems comprise at least one row of magneto-electricity systems formed by connecting at least two magneto-electricity system units; the magneto-electricity system forms an axisymmetric anomalous curved shape around the common axis; and the axisymmetric anomalous curved shape is not a plane perpendicular to the common axis or appears to be approximately perpendicular to the common axis.

7. The anomalous electric machinery according to claim 6, wherein magneto-electricity system forming the axisymmetric anomalous curved shape around the common axis comprises at least three of the magneto-electricity system units, and the shape formed by connecting the at least three of the magneto-electricity system units along the common axis in axial direction exhibits a shape in which one curved unit of the magneto-electricity system branches into at least two curved units of the magneto-electricity system; or
the shape formed by connecting at least three of said magneto-electricity system units along the common axis in radial direction exhibits a shape in which one curved unit of the magneto-electricity system branches into at least two curved units of the magneto-electricity system; or
at least three of said magneto-electricity system units are sequentially connected, form an axisymmetric anomalous curved shape around the common axis, and the axisymmetric anomalous curved shape is not a plane perpendicular to the common axis or appears to be approximately perpendicular to the common axis.

8. The anomalous electric machinery according to claim 6, wherein the side-by-side magneto-electricity systems comprise at least one magneto-electricity system unit according to claim 1.

9. The anomalous electric machinery according to claim 8, wherein the magneto-electricity system unit forms an axisymmetric anomalous curved shape around the common axis, and the shape of the axisymmetric anomalous curved shape of the unit along the common axis in axial direction exhibits a curved shape that warped in depth and/or a curved shape that bent and extended, and/or
the shape of the axisymmetric anomalous curved shape of the unit along the common axis in radial direction exhibits a curved shape that warped in depth and/or a curved shape that bent and extended.

10. The anomalous electric machinery according to claim 4 or 6, at least two of the magneto-electricity system units constituting the axisymmetric anomalous curved shape, wherein the shape of at least one magneto-electricity system unit along the common axis in axial direction exhibits a curved shape that warped in depth and/or a curved shape that bent and extended, and/or
the shape of the at least one magneto-electricity system unit along the common axis in radial direction exhibits a curved shape that warped in depth and/or a curved shape that bent and extended.

11. The anomalous electric machinery according to claim 5 or 7, at least three of the magneto-electricity system units constituting the axisymmetric anomalous curved shape, wherein the shape of the at least one magneto-electricity system unit along the common axis in axial direction exhibits a curved shape that warped in depth and/or a curved shape that bent and extended, and/or
the shape of the at least one magneto-electricity system unit along the common axis in radial direction exhibits a curved shape that warped in depth and/or a curved shape that bent and extended.

12. The anomalous electric machinery according to claim 1, 2, 4, 5, 6, 7, 8 or 9, wherein the common axis is a shaft connecting with at least one of the magneto-electricity system units; or, the common axis is an axis common to each of the magneto-electricity system units.

13. The anomalous electric machinery according to claim 1, 2, 4, 5, 6, 7, 8 or 9, wherein the armature component is stator and the magnetic pole component is rotor; or alternatively, the armature component is rotor, and the magnetic pole component is stator.

14. The anomalous electric machinery according to claim 1, 2, 4, 5, 6, 7, 8 or 9, wherein the armature component comprises a first armature, the magnetic pole component comprises a first magnetic group, and there is a magnetic gap between the first armature and the first magnetic group;
The first magnetic group employs permanent magnets; the first magnetic group is provided with a plurality of permanent magnets at an end face near the first armature; and the N poles and the S poles of the plurality of permanent magnets are alternately arranged along a circumferential direction rotating around the common axis; or
the first magnetic group employs electromagnets; the first magnetic group is provided with a plurality of electromagnets at the end face near the first armature; external current flows through coil conductors wound around the electromagnets so that the electromagnets can have magnetic property and that the N poles and the S poles of the plurality of electromagnets are alternately arranged along circumferential direction rotating around the common axis.

15. The anomalous electric machinery according to claim 1, 2, 4, 5, 6, 7, 8 or 9, wherein the armature component comprises a second armature and a third armature, the magnetic pole component comprises a second magnetic group, the second magnetic group is located between the second armature and the third armature, and there are magnetic gaps between the second magnetic group and the second and third armatures;
The second magnetic group employs permanent magnets; the second magnetic group is provided with a plurality of permanent magnets at both end faces near the second and third armatures; the N poles and the S poles of the plurality of permanent magnets are alternately arranged along circumferential direction rotating around the common axis; or
the second magnetic group employs electromagnets; the second magnetic group is provided with a plurality of electromagnets at both end faces near the second and third armatures; external current flows through the coil conductors wound around the electromagnets so that the electromagnets can have magnetic property and that the N poles and the S poles of the plurality of electromagnets are alternately arranged along circumferential direction rotating around the common axis.

16. The anomalous electric machinery according to claim 1, 2, 4, 5, 6, 7, 8 or 9, wherein the armature component comprise a fourth armature, the magnetic pole component comprises a third magnetic group and a fourth magnetic group, the fourth armature is located between the third magnetic group and the fourth magnetic group, and there are magnetic gaps between the fourth armature and the third and fourth magnetic groups;
The third magnetic group and the fourth magnetic group employ permanent magnets; the third magnetic group and the fourth magnetic group are provided with a plurality of permanent magnets at the end faces near the fourth armature; the N poles and the S poles of the plurality of permanent magnets are alternately arranged along circumferential direction rotating around the common axis; or
the third magnetic group and the fourth magnetic group employ electromagnets; the third magnetic group and the fourth magnetic group are provided with a plurality of electromagnets at both end faces near the fourth armature; external current flows through the coil conductors wound around the electromagnets so that the electromagnets can have magnetic property and that the N poles and the S poles of the plurality of electromagnets are alternately arranged along circumferential direction rotating around the common axis.

17. The anomalous electric machinery according to claim 2, 4, 5, 6, 7, 8 or 9, wherein at least two of the armature components are connected in series and/or in parallel to each other.
